# EUROPÄISCHE PATENTSCHRIFT

(11) **EP 3 601 117 B1**
(45) Veröffentlichungstag und Bekanntmachung des Hinweises auf die Patenterteilung: **04.05.2022**
(21) Anmeldenummer: 18713621.3
(22) Anmeldetag: 22.03.2018
(51) Int. Cl.: B65G 61/00, B65G 47/82, B65G 57/22

(54) **VERFAHREN ZUM AUTOMATISCHEN MEHRLAGIGEN BESTAPELN EINES TRÄGERS MIT PACKSTÜCKEN**
METHOD FOR AUTOMATICALLY STACKING PACKAGES IN LAYERS ON A SUPPORT
PROCÉDÉ POUR EMPILER AUTOMATIQUEMENT PLUSIEURS COUCHES DE PAQUETS SUR UN SUPPORT

(30) Priorität: 29.03.2017 DE 102017106746
(43) Veröffentlichungstag der Anmeldung: 05.02.2020
(73) Patentinhaber: Dematic GmbH, 63150 Heusenstamm (DE)
(72) Erfinder: MEURER, Hans Christoph, 55234 Framersheim (DE)
(74) Vertreter: Moser Götze & Partner Patentanwälte mbB
(86) Internationale Anmeldenummer: PCT/EP2018/057276
(87) Internationale Veröffentlichungsnummer: WO 2018/177875

(56) Entgegenhaltungen:
- WO-A1-2011/009150
- WO-A1-2011/088845
- DE-A1-102007 016 727
- DE-A1-102013 110 045
- ES-A1- 2 409 459

## Beschreibung

Die Erfindung betrifft ein Verfahren und ein System zum automatischen Stapeln von Packstücken auf einer Unterlage in einer vorbestimmten räumlichen Anordnung zur Ausbildung eines Stapels nach Anspruch 1.

Das automatische Bestapeln einer Unterlage oder eines Trägers, insbesondere einer Palette oder eines Rollwagens, mit Packstücken zum Ausbilden eines Stapels zum späteren Versand, also das "Palettieren" ist an sich bekannt. Hierbei werden jedoch Packstücke mit uniformer Größe bzw. Ausmaß durch Roboter, Greifer etc. auf rechnerisch bestimmte Plätze abgelegt.

Bei dem Prozess des automatischen Beladens eines Ladungsträgers mit Packstücken unterschiedlicher Ausprägung zum Ausbilden eines Stapels handelt es sich dagegen um das sogenannte automatische "mixed-case" Palettieren.

In der heutigen Distributionslogistik werden immer größere Anforderungen an die Kommissionierung gestellt. Es ist daher notwendig, Kommissioniersysteme zu entwickeln, die automatisch ohne manuelles Einwirken Aufträge abarbeiten.

Tausende von verschiedenen Produkten (bzw. Packstücke) unterschiedlichster Ausprägung (Größe, Form, Gewicht, Abmessungen, Oberflächen, Festigkeit, Kompressibilität etc.) müssen mit solchen Systemen automatisch kommissioniert werden.

Hierbei müssen unterschiedliche Aspekte berücksichtigt werden, die die Komplexität gegenüber dem "einfachen" manuellen Stapeln einfacher regelmäßiger Geometrien enorm erhöhen. So kann ein nachfolgendes Packstück nur gut auf ein vorheriges Packstück gestapelt bzw. abgelegt werden, wenn dieses eine flache bzw. ebene Oberfläche aufweist, die zudem etwa waagerecht ausgerichtet sein sollte, und wenn das Packstück das Gewicht der auf ihm abgelegten weiteren Packstücke ohne Beschädigung tragen kann.

Ferner sollte der gebildete Stapel eine gewisse Stabilität aufweisen, u. a. damit er beim Transport nicht umfällt. Eine Umwicklung mit Folie hilft zwar, kann aber nicht alleine einen fehlerhaft gebildeten Stapel stabilisieren.

Zudem wird abnehmerseitig immer häufiger eine Optimierung der Stapel aufgrund der gewünschten Entladereihenfolge gewünscht.

Das Stapeln unterschiedlicher Packstücke bzw. Waren unterschiedlicher Größe bzw. Ausmaßes erfolgt daher meist noch von Hand, da die Anforderungen an die Stabilität des Stapels, die Packungsdichte innerhalb des Stapels und die Reihenfolge der Beladung sowie die dabei bedingte Entladungsreihenfolge und nicht zuletzt die Stapelbarkeit der Waren extrem hoch sind und bisher nicht auch nur teilweise von den bekannten Verfahren und Vorrichtungen erfüllt werden.

Aus der EP 1 462 394 B1 ist eine Vorrichtung zum automatischen Beladen eines Ladungsträgers mit ladestapelbildenden Packeinheiten, also eine Vorrichtung zum Palettieren bekannt. Bei der Vorrichtung werden die Packeinheiten auf Tablaren lagernd und vereinzelt zugeführt und von diesen auf einen Packtisch abgelegt. Dort wird die Packeinheit auf dem Tisch liegend von einem Pusher entlang der Breitseite der zu beladenden Palette verschoben, bis die Beladungskoordinaten in X-Richtung erreicht sind. Anschließend schieben ein weiterer Pusher und eine Beladezunge simultan die Packeinheit in Richtung der Ladetiefe über die Palette bis die Beladungskoordinaten in Z-Richtung erreicht sind. Anschließend fährt die Beladezunge zurück, wobei der Pusher stehen bleibt und als Abstreifer dient, so dass die Packeinheit auf der Palette an der gewünschten Stelle "frei fallend" abgesetzt wird. Dabei wird der sich bildende Stapel von einer Beladehilfe an den übrigen drei Seiten gestützt. Es wird also quasi "gegen die Wand" gestapelt. Das Verschieben auf dem Packtisch ist allerdings zeitaufwendig und hat aufgrund der eingeschränkten Zugänglichkeit Nachteile bei der Bildung der Packmuster. Zudem ist zwingend, dass die Beladezunge und der Abstreifer/Pusher simultan in X-Richtung verfahren. Auch kann immer nur eine Packeinheit sequentiell "bearbeitet" werden.

Aus der WO 2010/059923 A1 ist eine automatische Robotor-gestützte Vorrichtung zum Stapeln bekannt, bei der eine Zwischenplatte für das Ausbilden der ersten Lage eines Stapels und gleichzeitigem Paletten-Wechsel verwendet wird.

WO 2011/009150 A1 offenbart ein Verfahren nach dem Oberbegriff des Anspruchs 1.

Demgegenüber besteht die Aufgabe der vorliegenden Erfindung darin, ein Verfahren zum automatischen mehrlagigen Bestapeln eines Trägers mit Packstücken unterschiedlicher Ausmaße in einer vorbestimmten räumlichen Anordnung bereitzustellen, das auf flexible Weise eine mixed-case Bestapelung mit höherem Durchsatz erlaubt.

Diese Aufgabe wird durch das in Anspruch 1 wiedergegebene Verfahren gelöst. Vorteilhafte Ausgestaltungen ergeben sich aus den Unteransprüchen und der Beschreibung.

Erfindungsgemäß ist erkannt worden, dass wenn anhand der vorbestimmten Reihenfolge und der vorbestimmten räumlichen Position der Packstücke rechnerisch geprüft wird, ob mindestens zwei, auf einer in die Stapelvorrichtung führende Förderstrecke der Fördertechnik, aufeinanderfolgende Packstücke gemeinsam an die vorausberechneten räumlichen Positionen auf dem Träger oder dem sich bildenden Stapel auf dem Träger durch die Handhabungsmittel transportierbar sind und wenn möglich, die aufeinanderfolgenden Packstücke gemeinsam gehandhabt werden, es möglich ist, den Durchsatz beim Stapeln zu erhöhen.

Mit anderen Worten, es werden, soweit möglich, Packstücke gemeinsam zur Stapelbildung gehandhabt. Somit werden also mindestens zwei Packstücke gemeinsam im Stapel platziert, so dass sich der Durchsatz erhöht.

Ist eine gemeinsame Handhabung nicht möglich, werden die Packstücke wie bekannt einzeln gehandhabt.

Die gemeinsame Handhabung bezieht sich also vornehmlich auf eine horizontale Gruppierung, insbesondere Paarung, von aufeinanderfolgenden Packstücken.

Vorzugsweise werden aufeinanderfolgende Packstücke auf der in die Stapelvorrichtung führende Förderstrecke der Fördertechnik zur gemeinsamen Handhabung gruppiert bzw. gepaart. Somit kann auf einfache Weise eine Gruppierung und insbesondere eine Paarung durch gezieltes Aufstauen und anschließende gemeinsame weitere Handhabung erfolgen. Dies kann z.B. durch Aufstauen oder Zusammenschieben erfolgen.

Möglich ist auch eine zusätzliche vertikale Gruppierung im Sinne einer Vorstapelung, so wie sie bereits in der eigenen DE 10 2013 110 045 A1 beschreiben ist. Dann werden Blöcke aus nebeneinander und übereinander angeordneten Packstücken gemeinsam gehandhabt. Dies beschleunigt den Stapelvorgang zusätzlich.

Es kann dann sinnvollerweise vor dem Transport des jeweiligen Packstücks an die jeweilig vorausberechnete räumliche Position auf dem Träger oder dem sich bildenden Stapel auf dem Träger, z.B. im Bereich einer Vorstapeleinheit, überprüft werden, ob das momentane Packstück mit dem nachfolgenden Packstück gepaart und zusätzlich ggf. auf weiteren nachfolgenden Packstücken zur Vorstapelung abgelegt werden kann und somit eine Blockbildung erfolgt.

Sollte eine Vorstapelung möglich sein, wird ein erstes Packstück in der Vorstapeleinheit angehoben, das nachfolgende zweite Packstück unterhalb des angehobenen ersten Packstücks positioniert und das erste Packstück auf das zweite Packstück zur Ausbildung eines Vorstapels abgesenkt. Mit anderen Worten, das erste Packstück wird von dem Förderer angehoben und das zweite Packstück an dieselbe Stelle gefördert, woraufhin das erste Packstück zur Ausbildung des Vorstapels abgesenkt wird. Dieser Vorgang kann für weitere Packstücke bis zum Erreichen einer maximalen Stapelhöhe wiederholt werden.

Anschließend können die Packstückstapel noch im Sinne der Erfindung gruppiert bzw. gepaart werden, um dann nach bewährter Manier in der Stapeleinheit an die vorausberechneten räumlichen Positionen auf dem Träger oder dem sich bildenden Stapel auf dem Träger transportiert zu werden.

Das erfindungsgemäße System ist also mit einem Rechner versehen, wobei der Rechner programmtechnisch ausgestaltet ist, um anhand der Reihenfolge und räumlichen Position der Packstücke auf dem Träger für mindestens zwei in der Reihenfolge aufeinanderfolgende Packstücke zu prüfen, ob diese gruppierbar und ggf. mit weiteren Packstücken aufeinander vorstapelbar und anschließend gemeinsam an die vorausberechneten räumlichen Positionen auf dem Träger oder dem sich bildenden Stapel auf dem Träger durch die Handhabungsmittel transportierbar sind.

In einer Variante können die Packstücke gemeinsam derart von den Handhabungsmitteln auf den Träger oder dem sich bildenden Stapel auf dem Träger bewegt werden, dass ihre Ausrichtung zueinander unverändert bleibt. Mit anderen Worten, hintereinander in Längsrichtung geförderte Packstücke, also eine längliche Anordnung von Packstücken, z.B. zwei stirnseitig stoßende Packstücke, werden in Längsrichtung auf den Stapel "abgelegt".

Vorzugsweise wird dann das erste Packstück passiv vom zweiten Packstück bewegt, das wiederum aktiv bewegt wird. Mit anderen Worten die Handhabungsmittel greifen an dem hinteren Packstück (in Verlagerungsrichtung besehen) an und dieses wiederum bewegt das erste Packstück. Z.B. könnte so ein Pusher das zweite Packstück schieben und so die davorliegenden Packstücke gemeinsam mitschieben.

In einer anderen Variante werden die Packstücke dagegen gemeinsam derart von den Handhabungsmitteln auf den Träger oder dem sich bildenden Stapel auf dem Träger bewegt, dass ihre Ausrichtung zueinander um etwa 90 Grad gedreht ist. Mit anderen Worten, hintereinander in Längsrichtung geförderte Packstücke, werden in Querrichtung angeordnet und ausgerichtet auf den Stapel "abgelegt". Dies kann beispielsweise durch den Umsetzer erreicht werden, der weiter unten beschrieben ist. Dieser erlaubt es, hintereinander herangeförderte Packstücke nebeneinander anzuordnen und dann gemeinsam zu platzieren.

Üblicherweise wird die rechnergestützte Bestimmung der Reihenfolge und räumlichen Position der Packstücke unterschiedlichen Ausmaßes in dem zu bildenden Stapel auf dem Träger, der sogenannte Palettenplan, zentral in einer übergeordneten Steuerung nach Auftragseingang berechnet. Erfindungsgemäß erfolgt die rechnerische Prüfung, ob die aufeinanderfolgenden Packstücke gemeinsam an die vorausberechneten räumlichen Positionen auf dem Träger oder dem sich bildenden Stapel auf dem Träger durch die Handhabungsmittel transportierbar sind, in der Steuerung der Stapelvorrichtung selbst, insbesondere wenn die Packstücke sich auf der in die Stapelvorrichtung führenden Förderstrecke befinden.

Es wird also unabhängig von dem Palettenplan in der lokalen Steuerung der Stapelvorrichtung quasi ad hoc eine Prüfung auf eine mögliche gemeinsame Handhabung vorgenommen. Diese Prüfung erfolgt vorzugsweise kurz vor dem Eintritt in die eigentliche Stapelzelle, also auf der in die Stapelvorrichtung führenden Förderstrecke, da dann eine einfache gemeinsame Gruppierung, z.B. durch Stauen, möglich ist.

Somit muss die übergeordnete Bestimmung des Palettenplans nicht geändert werden. Sie kann aber prinzipiell auch hinsichtlich Gruppierung und Reihenfolge der Anförderung hinsichtlich der Erfindung optimiert werden, wozu dann der entsprechende Algorithmus verändert wird, so dass mehr Gruppierungen möglich sind.

Erfindungsgemäß kann der Positionierförderer als Verfahrwagen oder Shuttle ausgebildet sein, der auf in X-Richtung längs des Stapelplatzes bzw. der Unterlage dafür angeordneten Schienen hin- und her fahrbar ist und jeweils ein Packstück an die vorgesehene X-Position transportiert.

Alternativ kann auch einfach ein umlaufender Endlosförderer oder sogar ein Tisch mit Pusher als Positionierförderer vorgesehen sein.

Vorzugsweise ist der Verfahrwagen mit einem C-förmigen Gestell ausgebildet, so dass dann die mindestens eine Schiebeplatte zwischen die Schenkel des "C" hindurchgreifen kann, so dass sich keine gegenseitige Behinderung ergibt. Dies erlaubt es auch, dass der Verfahrwagen nach erfolgter "Übergabe" des Packstücks an die Schiebeplatte vor Beendigung des Stapelvorgangs bereits zurück zur Übernahme des nächsten Packstücks vom Zuführförderer fährt. Die eigentliche Trägerfläche für das Packstück ist also nur an einer Seite an dem Fahrgestell des Verfahrwagens befestigt und kragt von dort aus.

Damit die Packstücke nicht vom Verfahrwagen herunterfallen, kann dieser auf der in X-Richtung dem Zuführförderer abgewandten Seite einen Anschlag aufweisen bzw. z.B. auch über in X-Richtung synchron mit dem Werkstück verfahrbare Anschläge auf dem Zuführförderer bzw. dem Verfahrwagen.

Alternativ kann der Anschlag auch als in X-Richtung vorpositionierbare Anschlagplatte ausgestaltet sein, die an einem in X-Richtung verlaufenden oberhalb angeordneten Schlitten oder Traverse, der den Antrieb trägt, hängt, wobei die Platte in X-Richtung anhand der vorbestimmten Position des jeweiligen Packstücks positioniert wird.

In der DE10 2012 106 109 A1 ist eine entsprechende Vorrichtung zur mehrlagigen Bestapelung einer Unterlage detailliert beschrieben und hierauf wird vollumfänglich hinsichtlich der Ausgestaltung einer im Rahmen der Erfindung einzusetzenden Stapelvorrichtung Bezug genommen. Es wird daher nachfolgend lediglich auf wesentliche Merkmale eingegangen.

Wenn kein einzelner Pusher wie im Stand der Technik verwendet wird, sondern der Pusher als Anordnung einer Mehrzahl horizontal und längs der Seite des Stapelplatzes angeordneter Einzelpusher, also als Batterie ausgebildet ist, die das Abschieben der Packstücke von dem Positionierförderer in Richtung auf den Stapel vornehmen, wobei die Einzelpusher unabhängig von der mindestens einen Schiebeplatte in Z-Richtung verfahrbar sind, um das Packstück beim Zurückziehen der Schiebeplatte zurückzuhalten, können die Packstücke noch variabler positioniert werden und zudem mehrere Packstücke mit weniger Zeitversatz oder sogar gleichzeitig gestapelt werden.

In einer bevorzugten Ausführungsform ist die mindestens eine Schiebeplatte als horizontal und längs der Seite des Stapelplatzes und quer dazu beweglich ausgebildete flache streifenförmige Platte ausgebildet, die in Richtung des Stapelplatzes dünner zuläuft. Die Schiebeplatte ist auf der dem Träger gegenüberliegenden Seite des Positionierförderers aufgehängt. Sie ist dort ggf. am selben Gestell wie die Einzelpusher befestigt. Sind mehr als eine Schiebeplatte vorhanden, können diese parallel und nebeneinander angeordnet werden.

Zwischen dem Zuführförderer und dem Positionierförderer kann ein Umsetzer für die Packstücke angeordnet sein. Dieser kann als Pusher ausgestaltet sein. Dabei ist es möglich, dass der Pusher gemeinsam mit dem Verfahrwagen das Packstück an die gewünschte X-Position transportiert, so dass das Packstück quasi zwischen Pusher und Anschlag des Verfahrwagens "eingeklemmt" transportiert wird. Somit sind hohe Beschleunigungen und Geschwindigkeiten bei der Positionierung ohne eine Gefahr des Verschiebens, Herabfallens usw. möglich.

Somit ist in einer Variante der Pusher (Umsetzer) an einer sich längs des Trägers erstreckenden und parallel zum Positionierförderer verlaufenden Schiene beweglich aufgehangen und angetrieben. Auch denkbar ist, dass der Pusher nur zum Verhindern eines Herunterfallens mitfährt, aber dabei keine aktive Wirkung hinsichtlich der Positionierung besitzt. Diese wird dann vornehmlich durch den Verfahrwagen selbst bzw. dem oben angegebenen beweglichen Stopper vollzogen.

Es ist jedoch auch denkbar, dass der Zuführförderer die Packstücke direkt auf den Positionierförderer aufbringt ohne Zwischenschaltung eines Umsetzers. In einer Variante endet der Zuführförderer dazu senkrecht zum Positionierförderer und "schiebt" die Packstücke direkt auf den Positionierförderer auf.

Insgesamt ist es so möglich, die Bestapelung des Trägers flexibel und mit hoher Leistung durchzuführen. Insbesondere kann ein breites Spektrum an unterschiedlichen Packstücken kontinuierlich gestapelt werden. Es können also neben den selbstverständlich ebenfalls handhabbaren gleichförmigen wenig anspruchsvollen Packstücken Packstücke mit unterschiedlichsten Abmessungen nacheinander auf den Träger gestapelt werden.

Als Packstücke kommen unterschiedlichste Waren, verpackte Waren, in Gruppen verpackte Waren, wie Kartons, Kisten, Kästen, Behälter, Waren auf Tablaren, Packeinheiten, wie z.B. Folien-Merfachverpackungen von Kunststofflaschen etc., als auch einzelne Artikel aller Art in Frage.

Als Unterlage kommen Zwischenplatten oder Träger, wie Paletten auch Rollwagen, oder ähnliche Unterlagen für Stückgüter und deren Verpackungen in Frage.

Unter Zuführförderer werden Förderer im Allgemeinen und insbesondere Rollenförderer, Förderbänder und Fördersysteme verstanden. Diese können manuell oder automatisch beschickt werden. Die Packstücke werden vereinzelt und in der richtigen Reihenfolge für die gewünschte Packsequenz auf der Fördertechnik angedient. Die richtige Reihenfolge wird rechnerisch bei der Abarbeitung eines Auftrags ermittelt. Entsprechende Software dazu ist bekannt. Die Besonderheit liegt darin, dass die Packstücke auf dem Zuführförderer ohne Hilfsmittel, wie Tablaren, Behälter etc, angedient werden.

Günstig ist es auch, wenn die Packstücke vor der Übernahme durch die Verlagerungsmittel ausgerichtet werden. Dies erlaubt eine standardisierte und somit vereinfachte Übernahme der Packstücke durch die Verlagerungsmittel. Alternativ oder zusätzlich können auch entsprechende optische Verfahren zur Erkennung der Ausrichtung der Packstücke und Steuerung der Verlagerungsmittel verwendet werden, um mit diesen die Ausrichtung zu erreichen. Die Ausrichtung kann z.B. durch den Umsetzer erfolgen. Auch der bewegliche Anschlag kann zum Ausrichten verwendet werden.

Weitere Details der Erfindung ergeben sich aus der nachfolgenden Beschreibung von Ausführungsbeispielen anhand der Zeichnung, in der
- Fig. 1: eine schematische perspektivische Ansicht auf eine Vorrichtung zum automatischen mehrlagigen Bestapeln von Paletten beim Beginn der Bildung der ersten
- Fig. 2: Schicht zeigt; eine vergrößerte schematische Seitenansicht auf die Vorrichtung aus Fig. 1 im Bereich des Endlos-Förderers zeigt;
- Fig. 3: eine Figur 2 entsprechende Ansicht aus einem anderen Blickwinkel;
- Fig. 4: eine Figur 2 entsprechende Ansicht nach der Fertigstellung der ersten Schicht;
- Fig. 5: eine schematische Ansicht der gemeinsamen Handhabung von gepaarten Packstücken;
- Fig. 6: eine Figur 3 entsprechende Ansicht unter Einbeziehung einer Vorstapeleinheit;
- Fig. 7: ein Flussdiagram des Ablaufs der Vorstapelung.

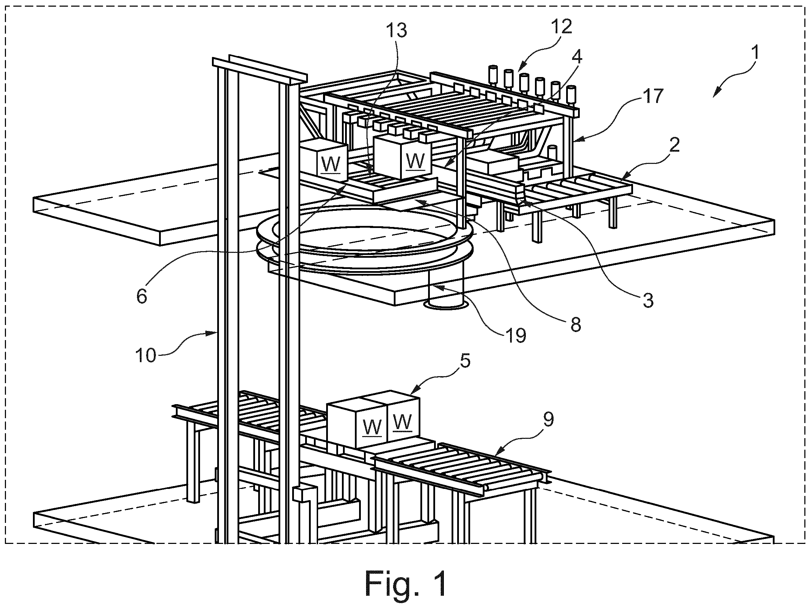

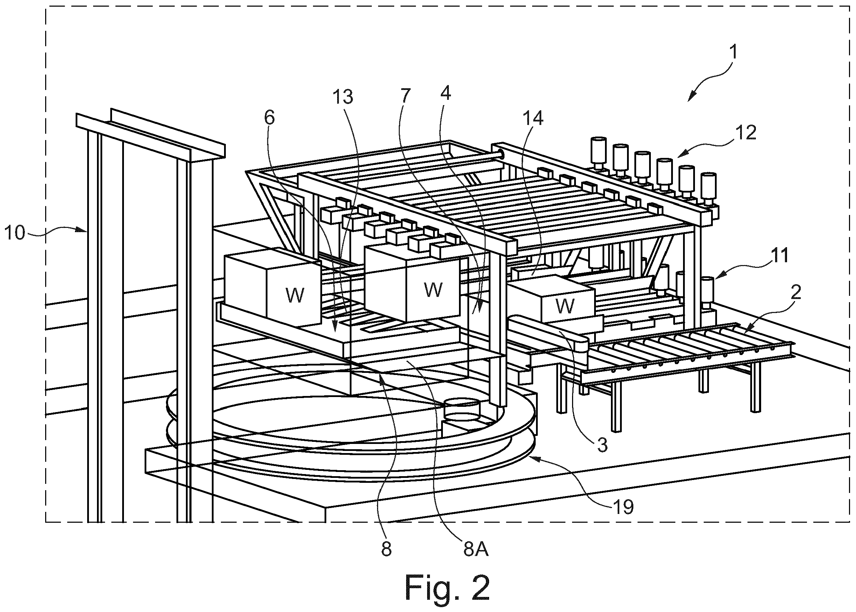

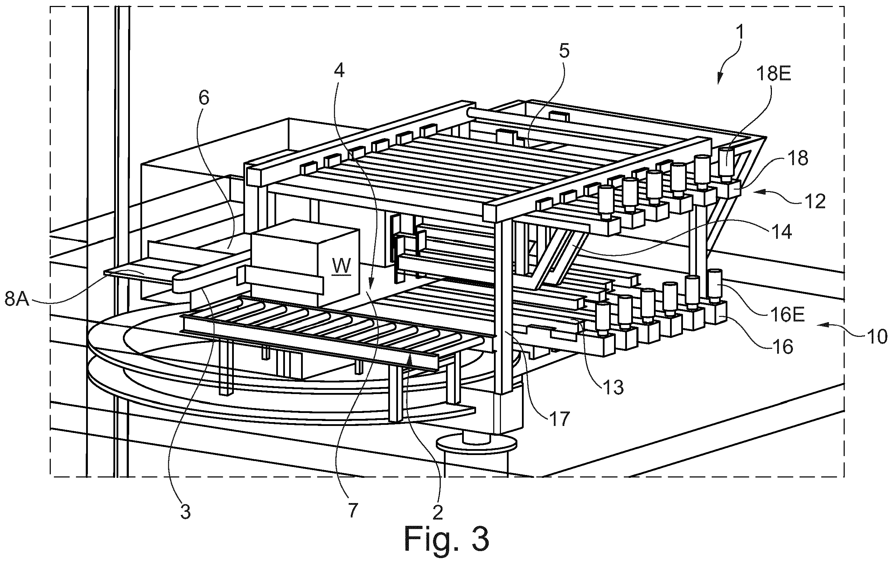

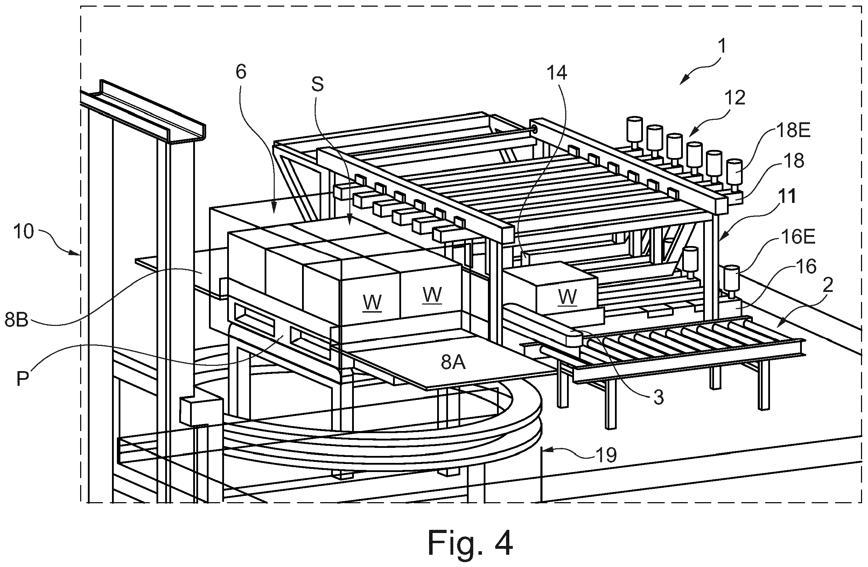

In den Figuren 1 bis 7 ist eine als Ganzes mit 1 bezeichnete Vorrichtung zum automatischen mehrlagigen Bestapeln von Paletten P mit Packstücken W unterschiedlichen Ausmaßes in einer vorbestimmten räumlichen Anordnung gezeigt. Es handelt sich also um eine Vorrichtung zum "mixed-case" Palettieren. Natürlich können mit der Vorrichtung 1 auch lediglich gleichartige Packstücke W palettiert werden.

Nachfolgend wird zum besseren Verständnis, Packstück im Singular verwendet, wobei klar ist, dass die Beschreibung auch gemeinsam gehandhabte Packstücke umfasst.

Die Vorrichtung 1 umfasst einen Rollenförderer 2 als Zuführförderer, der die vereinzelten Packstücke W in einer rechnergestützten vorbestimmten Reihenfolge aus einem nicht gezeigten Lager bereitstellt. Der Rollenförderer 2 als Zuführförderer weist im Bereich des Einlaufens in die Stapelvorrichtung mehrere einzeln steuerbare Stauzonen auf.

Am Ende des Rollenförderers 2 ist ein als Pusher 3 ausgebildeter Umsetzer 31 angeordnet, der die Packstücke W um 90 Grad umsetzt und auf den nachfolgenden Positionierförderer abgibt. Dabei werden die Packstücke W ebenfalls winklig ausgerichtet, so dass sie soweit aufgrund ihrer äußeren Form möglich, auf dem Positionierförderer 4 ausgerichtet sind.

Der Positionierförderer 4 ist als Verfahrwagen ausgebildet. Durch Ihn werden die Packstücke W in X-Richtung positioniert, um diese Koordinate der späteren Position im Stapel einzunehmen.

Um die Positionierung genau einzuhalten, ist ein Stopper 5 vorgesehen, der in X-Richtung relativ zum Förderband beweglich angesteuert wird, um das jeweilige Packstück "anzuhalten". Je nach Anlagentyp ist die Verwendung eines Stoppers zur Positionierung des Packstücks nicht zwingend erforderlich und kann entfallen. Der Antrieb erfolgt über einen Zahnriemen (nicht gezeigt), der an der Linearachse angeordnet ist und in den der Stopper 5 eingehängt ist.

Der Positionierförderer bzw. der Verfahrwagen oder genauer dessen Transportfläche ist horizontal auf selbem Niveau und längs einer Seite des Platzes 6 für die Stapelbildung angeordnet. Üblicherweise wird hier der zu beladende Träger P (Palette) oder Rollwagen angeordnet sein.

Auf dem Niveau der Transportfläche oberhalb des zu beladenden Trägers P ist eine Zwischenplatte 8 in dem Platz 6 vorgesehen. Die Zwischenplatte 8 ist derart mittig geteilt und jeder Teil 8A, B zur Seite hin (in X-Richtung) verschiebbar ausgestaltet, dass ein Stapel auf der Zwischenplatte 8 gebildet wird, während der komplett beladene Träger P des vorherigen Stapelvorgangs darunter gegen einen neuen leeren Träger P getauscht wird. Somit kann der Stapelvorgang ohne Unterbrechung fortgesetzt werden.

Zum Zuführen leerer Paletten bzw. Abführen bestapelter Paletten ist ein entsprechender Rollenförderer 9 unterhalb des Stapelplatzes 6 vorgesehen.

Von dem Rollenförderer wird die jeweilige Palette P von einer Hub- und Senkeinheit 10 zum Heben und Senken des Trägers P in Y-Richtung übernommen und nach oben zum Stapelplatz 6 gefahren. Die Hub- und Senkeinheit 10 ist auch für die Niveauanpassung beim Stapeln an sich zuständig, führt also falls nötig beim Stapeln eines Packstücks W einen Hub oder eine Absenkung aus und führt auch die Anpassung des Ausgleichs der Schichten beim Beginn einer neuen Schicht aus.

Von dem Verfahrwagen 4 wird das jeweilige Packstück W also auf die gewünschte Position in dem Stapel seitlich in den Platz 6 auf die Zwischenplatte 8 in Z-Richtung abgeschoben.

Für diese Verlagerung der Packstücke W an die vorherbestimmte Position im Stapel S umfasst die Vorrichtung Schiebeplatten 11 und eine Pusher-Batterie 12, also jeweils eine Mehrzahl von nebeneinander horizontal und längs der Seite des Stapelplatzes 6 bzw. der Palette P angeordnete einzelne Schiebeplatten 13 und einzelne Pusher 14.

Die Schiebeplatten 13 greifen zwischen dem Gestell 7 des Verfahrwagens 4 hindurch und übernehmen das durch den Pusher 14 abgeschobene Packstück W. Anschließend fahren der Pusher und die Schiebeplatte gemeinsam an die gewünschte Position und die Schiebeplatte 13 wird zurückgezogen, während der Pusher 14 zum Zurückhalten des Packstücks W stehen bleibt. Somit wird das Packstück W positioniert. Die Schiebeplatten 13 laufen vorne flach zu, so dass die Positionierung möglichst genau erfolgen kann.

Die Schiebeplatten 13 sind jeweils als horizontal und längs der Seite des Stapelplatzes 6 und quer dazu beweglich ausgebildete flache streifenförmige Platten ausgebildet, die in Richtung des Stapelplatzes 6 dünner zulaufen.

Die Schiebeplatten 13 sind auf der dem Träger gegenüberliegenden Seite des Verfahrwagens 4 aufgehängt und parallel und nebeneinander angeordnet. Sie sind jeweils auf einer in Z-Richtung ausgerichteten Linearachse 16 schlittenartig vor- und zurück beweglich. Der Antrieb erfolgt je Achse über einen Elektromotor 16E und einen Zahnriemen (nicht gezeigt), der an der Linearachse angeordnet ist und in den der Schlitten bzw. die Schiebeplatte 13 eingehängt ist.

Die Schiebeplatten 13 bilden somit quasi eine wahlweise Verbreiterung des Verfahrwagens 4 in den Stapelplatz 6 hinein aus.

Die Pusher 14 sind horizontal und längs der Seite des Stapelplatzes 6 bzw. des Trägers P miteinander fluchtend angeordnet sowie unabhängig voneinander verfahrbar ausgebildet. Sie sind auf der dem Träger gegenüberliegenden Seite des Positionierförderers angeordnet bzw. befinden sich dort in Ruhestellung, um über den Verfahrwagen 4 zum Abschieben von Packstücken auszufahren.

Die Pusher sind wie die Schiebeplatten auch über die gesamte Länge des Stapelplatzes 6 bzw. der Palette P angeordnet und an einem oberhalb des Positionierförderers aufgespanntem Gestell 17 befestigt. Dort sind sie jeweils auf einer Z-Richtung ausgerichteten Linearachse 18 schlittenartig vor- und zurück beweglich. Der Antrieb erfolgt je Achse über einen Elektromotor 18E und über einen Zahnriemen (nicht gezeigt), der an der Linearachse angeordnet ist und in den der Schlitten bzw. die Pusher 14 eingehängt ist.

Sowohl der Stopper 5 als auch die Pusher 14 erstrecken sich von der jeweiligen Linearachse nach unten auf eine Höhe nur knapp oberhalb der Oberfläche des Förderbands 4 und weisen am dortigen Ende einen flächig vergrößerten Fuß auf, um die Packstücke W besser und sicherer handzuhaben.

Unterhalb des Stapelplatzes 6 ist eine Einheit 19 zum Umwickeln des gebildeten Stapels S mit einer Folie vorgesehen.

Das Umwickeln erfolgt schichtweise nach und nach beim Bestapeln bzw. nach dem Bestapeln einer Schicht. Der Träger P mit den bereits gebildeten Schichten des Stapels S wird von der Hub- und Absenkeinheit 10, nach und nach, nach unten abgesenkt und fährt so durch die ringförmig ausgebildete Einheit 19 zum Umwickeln.

Ist der gesamte Stapel S fertig gestellt, wird der Stapel S auf die Palette P übergeben und nach unten gefahren und über den Rollenförderer 9 abtransportiert.

Gleichzeitig wird die Zwischenplatte 8 geschlossen und auf dieser weitergestapelt zur Ausbildung des nächsten Stapels des nächsten Auftrags.

Insgesamt wird also zum automatischen Stapeln von Packstücken W auf eine Palette P in einer vorbestimmten räumlichen Anordnung zur Ausbildung eines Stapels S rechnergestützt die Reihenfolge und räumliche Position der Packstücke W auf der Palette P zur Errichtung eines Stapels S anhand des zugrundeliegenden Auftrags bestimmt.

Dann werden die Packstücke W, W1, W2 in einer dazu benötigten vorbestimmten Reihenfolge mittels des Zuführförderers 2 aus einem Lager etc. vereinzelt ohne Hilfsmittel (Trays etc.) herbeigeschafft.

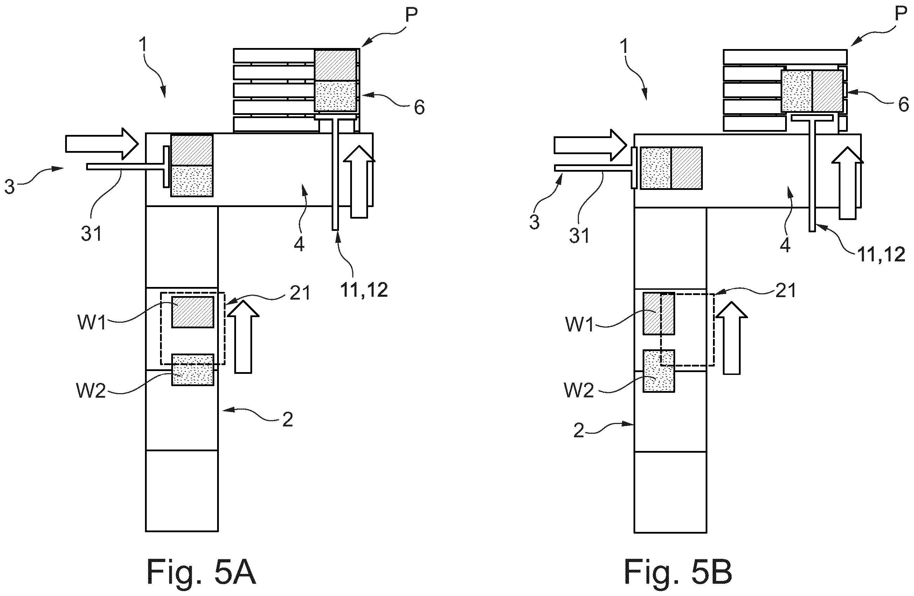

Noch auf dem Zuführförderer 2 (vgl. Figur 5A, B) wird anhand der vorbestimmten Reihenfolge und der vorbestimmten räumlichen Position der Packstücke W1, W2, also des Palettenplans, in der lokalen Steuerung der Vorrichtung 1 rechnerisch geprüft, ob mindestens zwei, auf der in die Stapelvorrichtung führende Förderstrecke 2 aufeinanderfolgende Packstücke W1, W2 gemeinsam an die vorausberechneten räumlichen Positionen auf dem Träger P oder dem sich bildenden Stapel S auf dem Träger P durch die Verlagerungsmittel 3, 4, 11, 12 transportierbar sind, und wenn möglich, werden die aufeinanderfolgenden Packstücke W1, W2 gemeinsam gehandhabt. Dazu wird anhand des Palettenplans in der lokalen Steuerung geprüft, ob die maßgeblichen Kriterien vorliegen, dass nämlich:
- die gemeinsam handhabbaren Packstücke W1, W2 als Gruppierung eine Länge kleiner als die Breite des Verfahrwagens 4 aufweisen;
- die gemeinsam handhabbaren Packstücke W1, W2 als Gruppierung eine Breite kleiner als die Länge des Verfahrwagens 4 aufweisen;
- die gemeinsam handhabbaren Packstücke W1, W2 als Gruppierung eine Breite kleiner als die Breite der eingesetzten Schiebeplatte(n) 11 aufweisen;

Der Palettenplan liegt also unabhängig von der übergeordneten Steuerung bzw. der Berechnung in der lokalen Steuerung vor, so dass die Vorrichtung 1 anhand der so vorliegenden Packstückliste und deren berechneten räumlichen Positionen im Stapel die Prüfung vornehmen kann. Somit läuft diese Funktion völlig autark ab, was im Falle von Störungen Vorteile bietet.

Weitere Kriterien berücksichtigen die Dynamik des Ablegevorgangs auf dem Träger, z. B. dass die Packstücke sich beim Absetzen ("Fallen") nicht behindern oder dass die Höhen der Packstücke nicht so unterschiedlich sind, dass es zum Kippen oder Verschieben kommt. Zudem wird auch berücksichtigt, dass die Achse durch die Schwerpunkte der Packstücke parallel zur der Bewegungsachse (beim passiven Schieben) verlaufen sollte.

Wenn diese Kriterien eingehalten werden, werden in der Variante nach Figur 5A die aufeinanderfolgenden Packstücke W1, W2 mittels aufstauen gruppiert bzw. gepaart und anschließend gemeinsam durch den Umsetzer 3 und den Verfahrwagen 4 sowie der Schiebeplatten 11 und Pusherbatterie 12 auf dem Träger P platziert.

Dabei ändert sich die Ausrichtung der Packstücke W1 und W2 zueinander nicht und das erste Packstück W1 wird passiv vom zweiten Packstück W2 bewegt, das wiederum aktiv von der Pusherbatterie 12 bewegt wird, da der diese dort angreift.

Alternativ werden in der Variante nach Figur 5B die aufeinanderfolgenden Packstücke W1, W2 mittels des Umsetzers 3 gruppiert bzw. gepaart und anschließend gemeinsam durch den Umsetzer 3 und den Verfahrwagen 4 sowie der Schiebeplatten 11 und Pusherbatterie 12 auf dem Träger P platziert. Dabei werden die die Packstücke W1, W2 vom dem Umsetzer 3 so bewegt, dass ihre Ausrichtung zueinander um etwa 90 Grad gedreht ist.

Es ist auch möglich, die so gruppierten Packstücke W1, W2 (oder analog Packstückstapel) einzeln auf den Ladungsträger bzw. Palette abzusetzen, so dass z.B. ein gewünschter Abstand zwischen diesen entsteht. Insbesondere kann dies bei der Variante nach Figur 5A erfolgen, indem das auf der Schiebeplatte 11 vordere Packstück (W1) zuerst abgelegt und dann die Schiebeplatte 11 bewegt und anschließend das hintere Packstück (W2) abgelegt wird.

Ist eine gemeinsame Handhabung bzw. Gruppierung nicht möglich, werden die zu verladenden Packstücke W anschließend von dem Zuführförderer 2 durch den Umsetzer 3 auf den Verfahrwagen 4 einzeln umgesetzt.

Mittels diesem und der Pusher-Batterie 12 und Schiebeplatten 13 wird das jeweilige Packstück W an die vorherbestimmte räumliche Position auf der Palette P bzw. dem Stapelplatz 6 oder Zwischenplatte 8 in dem sich bildenden Stapel transportiert.

Je nach Bedarf wird dabei die Palette P in Y-Richtung durch die entsprechende Einheit 10 abgesenkt oder angehoben.

Der Verfahrwagen 4 übernimmt von dem Zuführförderer 2 einzelne Packstücke W. Dazu schiebt der Umsetzer 31 die Packstücke vom Zuführförderer 2 auf den Verfahrwagen 4.

Der Verfahrwagen 4 weist einen beweglichen Anschlag 32 auf der abgewandten Seite auf, um ein Herabfallen der Packstücke 4 von der eigentlichen Transportfläche 35 zu verhindern und eine genaue Positionierung zu erlauben. Alternativ ist der Anschlag als vorpositionierbare Anschlagplatte - quasi umgekehrter Pusher- ausgeführt und wartet an der jeweiligen X-Position bereits.

Damit das Packstück W (oder die Packstücke bzw. die Gruppe) beim Beschleunigen des Verfahrwagens 4 nicht herunterfällt, wird der Umsetzer 31 synchron mit Verfahrwagen 4 in X-Richtung bewegt, so dass das jeweilige Packstück auf dem Verfahrwagen 4 zwischen dem Anschlag 5 und dem Umsetzer 31 eingeklemmt transportiert wird.

Die Vorrichtung 1 eignet sich also nicht nur zum Beladen von Paletten P, sondern auch zum Beladen von Rollwagen.

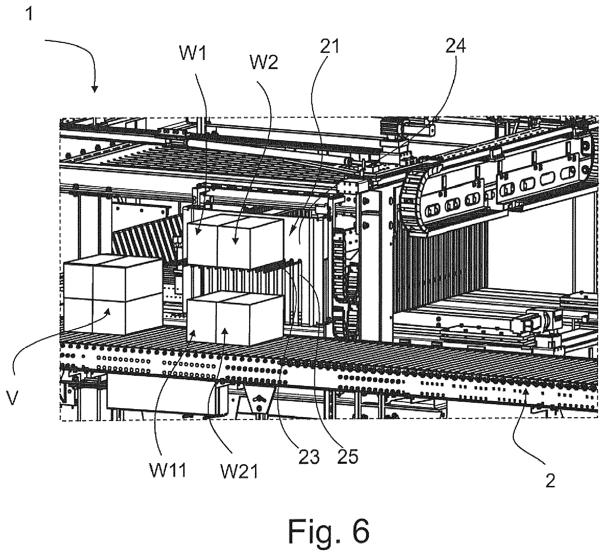

Wie in Figur 6 dargestellt, kann die Vorrichtung 1 zusätzlich eine Vorstapeleinheit 21 aufweisen, die im Bereich des Rollenförderers 2 vor dem als Pusher 3 ausgebildeten Umsetzer angeordnet ist, die zum weiteren Steigern des Durchsatzes beim automatischen Stapeln Packstücke W dient, wenn möglich, wozu zusätzlich zum horizontalen Gruppieren weitere Packstücke zum Vorstapeln aufeinandergesetzt werden, bevor diese dann gemeinsam umgesetzt und wie oben beschrieben gestapelt werden.

Bei der Anlieferung an der Vorrichtung 1 (vgl. oben) wird auch rechnerisch geprüft, ob es zusätzlich möglich ist Vorstapel zu bilden. Dazu wird beispielsweise für mindestens zwei in der Reihenfolge aufeinanderfolgende Packstücke W1, W2 ebenfalls berechnet, ob diese aufeinander vorstapelbar und gemeinsam (mit den bereits horizontal gruppierten Packstücken) als Vorstapel V (oder Block) an die vorausberechneten räumlichen Positionen auf dem Träger P oder dem sich bildenden Stapel S auf dem Träger P transportierbar sind.

Wenn das System bzw. der Rechner eine solche Möglichkeit erkennt, werden die jeweilig vorausfahrenden Packstücke W1, W2 in der Vorstapeleinheit 21 angehoben, die nachfolgenden Packstücke W11, W21 unterhalb der angehobenen Packstücke mittels des Rollenförderers 2 positioniert und zur Ausbildung eines Vorstapels V abgesenkt.

Dieser Vorstapel V wird analog des obigen Vorgehens bei einzelnen Packstücken W an die vorausberechneten räumlichen Positionen auf dem Träger P oder dem sich bildenden Stapel S auf dem Träger transportiert werden.

Die Vorstapeleinheit 21 weist dazu einen Hub- und Senkmechanismus 22 zum Anheben und Absenken eines Packstücks W mit einer anhebbaren und absenkbaren Gabel 23 auf, um das jeweilige Packstück vom Rollenförderer 2 abzuheben.

Die Gabel 23 des Hub- und Senkmechanismus 22 ist ebenfalls quer zur Hub- oder Senkbewegungsrichtung verlagerbar, so dass sie unter das Packstück W "untergeschoben" bzw. "herausgezogen" werden kann. Sie greift also mit ihren Zinken zwischen die Rollen des Förderers 2. Dazu können die Zinken senkrecht zur Förderrichtung des Förderers 2 vor- und zurückgefahren werden.

Damit die obenliegenden Packstücke W1, W2 beim Zurückziehen der Gabel 23 bzw. deren Zinken nicht verrutschen, weist der Hub- und Senkmechanismus 22 eine gegenüber der Gabel 23 festgelegte geschlitzte Rückhalteplatte 24 auf. Die Schlitze 25 verlaufen vertikal, so dass die Zinken der Gabel 23 diese durchgreifen können (bei der Vor- und Zurückbewegung) und ebenfalls vertikal angehoben bzw. abgesenkt werden können.

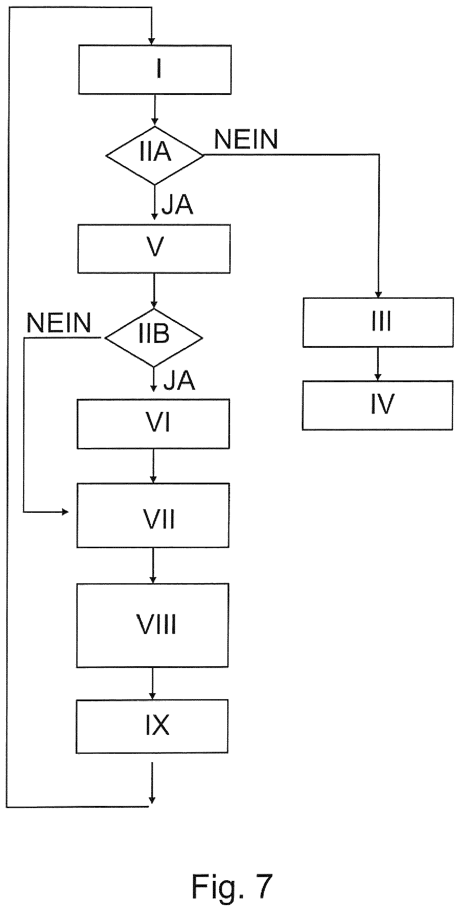

Laufen nun Packstücke W auf den Rollenförderer 2 ein (Schritt I), läuft das nachfolgend beschriebene Verfahren ab (vgl. Figur 7).

Es wird zunächst im Schritt II rechnerisch in der Vorrichtung selber anhand des Palettenplans geprüft, ob A) eine horizontale Gruppierung der nächsten aufeinanderfolgenden Packstücke W1, W2 möglich ist und anschließend ob B) zusätzlich eine Vorstapelbarkeit mit weiteren (entsprechend gepaarten) Packstücken W11, W21 gegeben ist.

Wenn dies nicht der Fall ist, werden die Packstücke W gemäß Schritt III ohne Gruppierung durch Zusammenschieben oder Handhabung durch die Vorstapeleinheit 21 gefördert und wie oben beschrieben "ganz normal" einzeln palettiert, also an die vorausberechnete Position im Stapel S transportiert (Schritt IV).

Ist eine horizontale Paarung der Packstücke W1, W2 möglich, werden diese auf dem Zuführförderer 2 entsprechend gestaut, sodass sie zusammengeschoben sind (Schritt V).

Ist eine Vorstapelung ebenfalls möglich, werden die gruppierten Packstücke W1, W2 in der Vorstapeleinheit 21 auf dem Förderer 2 positioniert (Schritt VI).

Anschließend fahren die Zinken der Gabel 23 aus und heben die Packstücke W1, W2 auf eine definierte Höhe an (Schritt VI), dass die Packstücke W1, W2 inkl. der Zinken nur geringfügig höher angeordnet sind als notwendig, um die nachfolgende Positionierung der ebenfalls gepaarten Packstücke W11, W21 zu erlauben.

Dann werden die gepaarten Packstücke W11, W21 so mittels des Rollenförderers 2 in der Vorstapeleinheit 21 positioniert (Schritt VII), dass sie direkt mittig unterhalb der angehobenen Packstücke W1, W2 angeordnet sind.

Danach werden im Schritt VIII die Zinken zurückgezogen und die Packstücke W1, W2 werden dabei durch die Rückhalteplatte 24 in ihrer Position gehalten. Sobald die Zinken vollständig zurückgezogen sind, kommen die oberen Packstücke W1, W2 auf den unteren Packstücke W11, W21 zum Liegen und bilden so einen Vorstapel V oder Block aus.

Der Vorstapel V wird anschließend (Schritt IX) genauso palettiert, also an die vorausberechnete Position im Stapel S transportiert, als wäre er ein einzelnes Packstück W.

Es versteht sich, dass auch der umgekehrte Vorgang, erst stapeln, dann gruppieren möglich ist.

## Patentansprüche

1. Verfahren zum automatischen mehrlagigen Bestapeln eines Trägers (P) mit Packstücken (W) unterschiedlichen Ausmaßes in einer vorbestimmten räumlichen Anordnung zur Ausbildung eines Stapels, umfassend die Schritte:
- rechnergestützte Bestimmung der Reihenfolge und räumlichen Position der Packstücke (W) unterschiedlichen Ausmaßes in dem zu bildenden Stapel auf dem Träger (P);
- Herbeischaffen der vereinzelten Packstücke (W) in einer dazu benötigten Reihenfolge mittels Fördertechnik (2);
- Transport der zu verladenden Packstücke (W) von der Fördertechnik (2) an die vorausberechneten räumlichen Positionen auf dem Träger (P) oder dem sich bildenden Stapel (S) auf dem Träger (P) durch Handhabungsmittel einer Stapelvorrichtung zur Ausbildung des Stapels;
**dadurch gekennzeichnet, dass** anhand der vorbestimmten Reihenfolge und der vorbestimmten räumlichen Position der Packstücke (W) rechnerisch geprüft wird,
ob mindestens zwei, auf einer in die Stapelvorrichtung führende Förderstrecke der Fördertechnik, aufeinanderfolgende Packstücke (W1, W2) gemeinsam an die vorausberechneten räumlichen Positionen auf dem Träger (P) oder dem sich bildenden Stapel (S) auf dem Träger (P) durch die Handhabungsmittel transportierbar sind, und wenn möglich, die aufeinanderfolgenden Packstücke (W1, W2) gemeinsam gehandhabt werden.

2. Verfahren nach Anspruch 1, **dadurch gekennzeichnet, dass** aufeinanderfolgende Packstücke (W1, W2) auf der in die Stapelvorrichtung führende Förderstrecke der Fördertechnik zur gemeinsamen Handhabung gruppiert werden.

3. Verfahren nach Anspruch 1 oder 2, **dadurch gekennzeichnet, dass** die Packstücke (W1, W2) gemeinsam derart von den Handhabungsmitteln auf den Träger (P) oder dem sich bildenden Stapel (S) auf dem Träger (P) bewegt werden, dass ihre Ausrichtung zueinander unverändert bleibt.

4. Verfahren nach Anspruch 3, **dadurch gekennzeichnet, dass** das erste Packstück (W1) passiv vom zweiten Packstück (W2) bewegt wird, das wiederum aktiv bewegt wird.

5. Verfahren nach Anspruch 1 oder 2, **dadurch gekennzeichnet, dass** die Packstücke (W1, W2) gemeinsam derart von den Handhabungsmitteln auf den Träger (P) oder den sich bildenden Stapel (S) auf dem Träger (P) bewegt werden, dass ihre Ausrichtung zueinander um etwa 90 Grad gedreht ist.

6. Verfahren nach einem der vorhergehenden Ansprüche, **dadurch gekennzeichnet, dass** die rechnerische Prüfung, ob die aufeinanderfolgenden Packstücke (W1, W2) gemeinsam an die vorausberechneten räumlichen Positionen auf dem Träger (P) oder dem sich bildenden Stapel (S) auf dem Träger (P) durch die Handhabungsmittel transportierbar sind, in der Steuerung der Stapelvorrichtung vorgenommen wird, insbesondere wenn die Packstücke (W1, W2) sich auf der in die Stapelvorrichtung führenden Förderstrecke befinden.

7. Verfahren nach einem der vorhergehenden Ansprüche, **gekennzeichnet, durch** eine Stapelvorrichtung mit
- mindestens einem in die Stapelvorrichtung führenden Zuführförderer, der die Packstücke (W1, W2) in einer vorbestimmten Reihenfolge bereitstellt;
- einer Steuerung zur rechnerischen Prüfung, ob mindestens zwei auf dem Zuführförderer aufeinanderfolgende Packstücke (W1, W2) gemeinsam an die vorausberechneten räumlichen Positionen auf dem Träger (P) oder dem sich bildenden Stapel (S) auf dem Träger (P) transportierbar sind;
- mit an einem Abgabeende des Zuführförderers angrenzenden Verlagerungsmitteln, die die Packstücke (W1, W2) gemeinsam von dem Zuführförderer (2) übernehmen und an die vorherbestimmte Position im Stapel (S) transportieren; wobei die Verlagerungsmittel umfassen:
- einen an dem Abgabeende des Zuführförderers angrenzenden Positionierförderer (4), der horizontal und längs zu einer Seite des Stapelplatzes (6) angeordnet ist, um die Packstücke (W1, W2) gemeinsam in X-Richtung zu positionieren,
- mindestens eine Schiebeplatte (13) und einen Pusher (14), um die Packstücke (W1, W2) gemeinsam von dem Positionierförderer in Z-Richtung an die vorherbestimmten Positionen im Stapel (S) zu transportieren.

8. Verfahren nach Anspruch 7, **dadurch gekennzeichnet, dass** die mindestens eine Schiebeplatte derart als horizontal und längs der Seite des Stapelplatzes (6) und quer dazu beweglich ausgebildete flache streifenförmige Platte ausgebildet ist, um die Packstücke (W1, W2) beim Abschieben der Packstücke (W1, W2) durch den Pusher von dem Positionierförderer an der X-Richtungsposition zu übernehmen und in Z-Richtung auf der Unterlage (P, 8, 45) oder in dem Stapel (S) abzulegen.

9. Verfahren nach Anspruch 7 oder 8, **dadurch gekennzeichnet, dass** die Packstücke (W1, W2) mittels einem als in X-Richtung verfahrbaren Verfahrwagen ausgebildeten Positionierförderer in X-Richtung positioniert werden.

10. Verfahren nach einem der vorhergehenden Ansprüche, **dadurch gekennzeichnet, dass** zusätzlich rechnerisch geprüft wird, ob Packstücke (W1, W2) aufeinander vorstapelbar und gemeinsam an die vorausberechneten räumlichen Positionen auf dem Träger (P) oder dem sich bildenden Stapel (S) auf dem Träger (P) durch Handhabungsmittel als Vorstapel (V) transportierbar sind.

11. Verfahren nach einem der vorhergehenden Ansprüche, **dadurch gekennzeichnet, dass** aufeinanderfolgende Packstücke gruppiert werden, wenn
- die gemeinsam handhabbaren Packstücke (W1, W2) als Gruppierung eine Länge kleiner als die Breite des Verfahrwagens/Shuttles aufweisen; und/oder
- die gemeinsam handhabbaren Packstücke (W1, W2) als Gruppierung eine Breite kleiner als die Länge des Shuttles aufweisen; und/oder
- die gemeinsam handhabbaren Packstücke (W1, W2) als Gruppierung eine Breite kleiner als die Breite der eingesetzten Schiebeplatte(n) aufweisen.

## Claims

1. Method for the automatic, multi-layered stacking of packing pieces (W) of different dimensions on a carrier (P) in a predetermined spatial arrangement to form a stack, comprising the steps of:
- computer aided determination of the sequence and spatial position of the packing pieces (W) of different dimensions in the stack to be formed on the carrier (P);
- fetching the singulated packing pieces (W) in a sequence required for this purpose by means of conveying equipment (2);
- transporting the packing pieces (W) to be loaded from the conveying equipment (2) to the precalculated spatial positions on the carrier (P) or the stack (S) being formed on the carrier (P) by handling means of a stacking device to form the stack;
**characterised in that** the predetermined sequence and the predetermined spatial position of the packing pieces (W) are used to check with computer aid whether at least two packing pieces (W1, W2) which follow one another on a conveying path of the conveying equipment leading into the stacking device can be transported together by the handling means to the precalculated spatial positions on the carrier (P) or the stack (S) being formed on the carrier (P) and, if possible, the successive packing pieces (W1, W2) are handled together.

2. Method as claimed in claim 1, **characterised in that** successive packing pieces (W1, W2) are grouped for joint handling on the conveying path of the conveying equipment leading into the stacking device.

3. Method as claimed in claim 1 or 2, **characterised in that** the packing pieces (W1, W2) are moved together by the handling means on the carrier (P) or the stack (S) being formed on the carrier (P) in such a way that their orientation with respect to each other remains unchanged.

4. Method as claimed in claim 3, **characterised in that** the first packing piece (W1) is moved passively by the second packing piece (W2) which for its part is actively moved.

5. Method as claimed in claim 1 or 2, **characterised in that** the packing pieces (W1, W2) are moved together by the handling means on the carrier (P) or the stack (S) being formed on the carrier (P) in such a way that their orientation with respect to each other is rotated by approximately 90 degrees.

6. Method as claimed in any one of the preceding claims, **characterised in that** the computer aided check whether the successive packing pieces (W1, W2) can be transported together by the handling means to the precalculated spatial positions on the carrier (P) or the stack (S) being formed on the carrier (P) is performed in the controller of the stacking device, in particular when the packing pieces (W1, W2) are located on the conveying path leading into the stacking device.

7. Method as claimed in any one of the preceding claims, **characterised by** a stacking device having
- at least one supply conveyor, leading into the stacking device, which provides the packing pieces (W1, W2) in a predetermined sequence;
- a controller for computer aided checking whether at least two packing pieces (W1, W2) which follow one another on the supply conveyor can be transported together to the precalculated spatial positions on the carrier (P) or the stack (S) being formed on the carrier (P);
- having displacing means, adjoining a discharge end of the supply conveyor, which pick up the packing pieces (W1, W2) together from the supply conveyor (2) and transport them to the predetermined position in the stack (S);
wherein the displacing means comprise:
- a positioning conveyor (4), adjoining the discharge end of the supply conveyor, which is arranged horizontally and along one side of the stacking area (6) in order to position the packing pieces (W1, W2) together in the X direction,
- at least one pushing plate (13) and one pusher (14) in order to transport the packing pieces (W1, W2) together from the positioning conveyor in the Z direction to the predetermined positions in the stack (S).

8. Method as claimed in claim 7, **characterised in that** the at least one pushing plate is formed as a flat, strip-like plate which can move horizontally and along the side of the stacking area (6) and transverse thereto in order to pick up the packing pieces (W1, W2) when the packing pieces (W1, W2) are pushed by the pusher from the positioning conveyor to the X direction position and to place them in the Z direction on the support (P, 8, 45) or in the stack (S).

9. Method as claimed in claim 7 or 8, **characterised in that** the packing pieces (W1, W2) are positioned in the X direction by means of a positioning conveyor formed as a travelling car which can travel in the X direction.

10. Method as claimed in any one of the preceding claims, **characterised in that** it is additionally arithmetically checked whether packing pieces (W1, W2) can be prestacked one on top of another and can be transported together by handling means as a pre-stack (V) to the pre-calculated spatial positions on the carrier (P) or the stack (S) being formed on the carrier (P).

11. Method as claimed in any one of the preceding claims, **characterised in that** successive packing pieces are grouped when
- the packing pieces (W1, W2), which can be handled together, as a group have a length smaller than the width of the travelling car/shuttle; and/or
- the packing pieces (W1, W2), which can be handled together, as a group have a width smaller than the length of the shuttle; and/or
- the packing pieces (W1, W2), which can be handled together, as a group have a width smaller than the width of the pushing plate(s) which are used.

## Revendications

1. Procédé d'empilage multicouche automatique de paquets (W) de différentes dimensions sur un support (P) suivant un agencement spatial prédéterminé afin de former un empilement, ledit procédé comprenant les étapes suivantes:
- déterminer informatiquement la séquence et la position spatiale des paquets (W) de différentes dimensions dans l'empilement à former sur le support (P);
- amener les paquets séparés (W) dans l'ordre requis par une technique de transport (2);
- transporter les paquets (W) à charger par la technique de transport (2) jusqu'aux positions spatiales pré-calculées sur le support (P) ou l'empilement (S) en cours de formation sur le support (P) par des moyens de manutention d'un dispositif d'empilage afin de former l'empilement;
**caractérisé en ce que**, sur la base de la séquence prédéterminée et de la position spatiale prédéterminée des paquets (W), un contrôle informatique étant effectué pour déterminer si au moins deux emballages successifs (W1, W2) sur une ligne de transport menant dans le dispositif d'empilage peuvent être transportés conjointement aux positions spatiales pré-calculées sur le support (P) ou à l'empilement (S) en cours de formation sur le support (P) par les moyens de manutention, et si possible, les paquets successifs (W1, W2) sont manipulés conjointement.

2. Procédé selon la revendication 1, **caractérisé en ce que** les paquets successifs (W1, W2) sont regroupés sur la ligne de transport menant dans le dispositif d'empilage afin d'effectuer une manutention conjointe.

3. Procédé selon la revendication 1 ou 2, **caractérisé en ce que** les paquets (W1, W2) sont déplacés conjointement par les moyens de manutention sur le support (P) ou l'empilement (S) en cours de formation sur le support (P) de manière à ce que leur orientation l'un par rapport à l'autre reste inchangée.

4. Procédé selon la revendication 3, **caractérisé en ce que** le premier paquet (W1) est déplacé passivement par le deuxième paquet (W2) qui est déplacé quant à lui activement.

5. Procédé selon la revendication 1 ou 2, **caractérisé en ce que** les paquets (W1, W2) sont déplacés conjointement par les moyens de manutention sur le support (P) ou l'empilement (S) en cours de formation sur le support (P) de manière à ce que leur orientation l'un par rapport à l'autre soit tournée d'environ 90 degrés.

6. Procédé selon l'une des revendications précédentes, **caractérisé en ce que** le contrôle informatique pour savoir si les paquets successifs (W1, W2) peuvent être transportés conjointement aux positions spatiales pré-calculées sur le support (P) ou l'empilement (S) en cours de formation sur le support (P) par les moyens de manutention, est effectue dans la commande du dispositif d'empilage, en particulier lorsque les paquets (W1, W2) se trouvent sur la ligne de transport menant dans le dispositif d'empilage.

7. Procédé selon l'une des revendications précédentes, **caractérisé par** un dispositif d'empilage comprenant
- au moins un transporteur d'alimentation menant dans le dispositif d'empilage et fournissant les paquets (W1, W2) suivant une séquence prédéterminée;
- une commande du contrôle informatique pour savoir si au moins deux paquets successifs (W1, W2) sur le transporteur d'alimentation peuvent être transportés conjointement vers les positions spatiales pré-calculées sur le support (P) ou vers l'empilement (S) en cours de formation sur le support (P);
- des moyens de déplacement qui sont adjacents à une extrémité de livraison du transporteur d'alimentation et qui prennent en charge conjointement les paquets (W1, W2) du transporteur d'alimentation (2) et les transportent jusqu'à la position prédéterminée dans l'empilement (S);
les moyens de déplacement comprenant:
- un transporteur de positionnement (4) qui est adjacent à l'extrémité de livraison du transporteur d'alimentation et qui est disposé horizontalement et longitudinalement par rapport à un côté de l'emplacement d'empilage (6) afin de positionner les paquets (W1, W2) conjointement dans la direction X,
- au moins une plaque coulissante (13) et un poussoir (14) afin de transporter les paquets (W1, W2) conjointement par le transporteur de positionnement dans la direction Z jusqu'aux positions prédéterminées dans l'empilement (S).

8. Procédé selon la revendication 7, **caractérisé en ce que** l'au moins une plaque coulissante est conçue comme une plaque en forme de bande plate, conçue pour être mobile horizontalement et latéralement par rapport au côté de l'emplacement d'empilage (6) et transversalement à celui-ci, afin de réceptionner les paquets (W1, W2) lorsque les paquets (W1, W2) sont poussés par le poussoir du transporteur de positionnement à la position dans la direction X et déposés dans la direction Z sur le support (P, 8, 45) ou dans l'empilement (S).

9. Procédé selon la revendication 7 ou 8, **caractérisé en ce que** les paquets (W1, W2) sont positionnés dans la direction X au moyen d'un transporteur de positionnement conçu comme un chariot déplaçable dans la direction X.

10. Procédé selon l'une des revendications précédentes, **caractérisé en ce qu'**un contrôle informatique supplémentaire est effectué pour déterminer si les paquets (W1, W2) peuvent être pré-empilés les uns sur les autres et transportés conjointement aux positions spatiales pré-calculées sur le support (P) ou l'empilement (S) en cours de formation sur le support (P) par des moyens de manutention en tant que préempilement (V).

11. Procédé selon l'une des revendications précédentes, **caractérisé en ce que** les paquets successifs sont regroupés lorsque
- les paquets (W1, W2) manipulables conjointement en tant que groupe ont une longueur inférieure à la largeur du chariot/navette; et/ou
- les paquets (W1, W2) manipulables conjointement en tant que groupe ont une largeur inférieure à la longueur de la navette; et/ou
- les paquets (W1, W2) manipulables conjointement en tant que groupe ont une largeur inférieure à la largeur de la ou des plaques coulissantes utilisées.
